# EUROPÄISCHE PATENTANMELDUNG

(11) **EP 1 283 585 A1**
(43) Veröffentlichungstag der Anmeldung: **12.02.2003**
(21) Anmeldenummer: 01810760.7
(22) Anmeldetag: 06.08.2001
(51) Int. Cl.: H02K 15/095

(54) **Vorrichtung zum Wickeln eines mehrpoligen Stators**

(71) Anmelder: ATS Wickel- und Montagetechnik AG, 5436 Würenlos (CH)
(72) Erfinder: Rieser, Urs, 5507 Mellingen (CH); Eugster, Beat, 8113 Boppelsen (CH); Wyss, Vinzenz, 5426 Lengnau (CH)
(74) Vertreter: Patentanwälte Breiter + Wiedmer AG

(57) **Zusammenfassung**

Eine Vorrichtung (10) zum Wickeln von Draht um Polhörner eines mehrpoligen rotationssymmetrischen Stators (12) einer elektrischen Maschine weist einen Drahtführer zur Ausgabe des Drahtes und zur Ausführung einer aus Einzelbe-wegungen zusammengesetzten Wickelbewegung um das zu umwickelnde Polhorn und einer Verschiebebewegung in Längsrichtung des Polhornes auf. Der Drahtführer ist zur Ausführung einer ersten Verschiebebewegung in einer ersten Richtung (z) mit einer axial in der ersten Richtung (z) verschiebbaren Wikkelstange (60) wirkverbunden, ein Schaltapparat ist zur Ausführung einer zweiten Verschiebe- bzw. Drehbewegung in einer zweiten Richtung mit dem zu wikkelnden Stator (12) wirkverbunden, und der Drahtführer ist zur Ausführung der Verschiebebewegung in einer der Längsrichtung des zu umwickelnden Polhornes entsprechenden dritten Richtung (x) mit einer in der dritten Richtung (x) verschiebbaren Halterung (32) verbunden.

## Beschreibung

Die Erfindung betrifft eine Vorrichtung zum Wickeln von Draht um Polhörner eines mehrpoligen rotationssymmetrischen Stators einer elektrischen Maschine, mit einem Drahtführer zur Ausgabe des Drahtes und zur Ausführung einer aus Einzelbewegungen zusammengesetzten Wickelbewegung um das zu umwikkelnde Polhorn und einer Verschiebebewegung in Längsrichtung des Polhornes.

Im Automobilbau ersetzen Elektronikmotoren in zunehmendem Masse die bis anhin bekannten Kollektormotoren. Von ihrer Bauart wird zwischen Innenläuferund Aussenläufermotoren unterschieden. Der Blechschnitt des Stators eines Innenläufermotors entspricht annähernd dem Blechschnitt eines Asynchronmotors.

Wünschenswert bei einem Stator eines Innenläufermotors ist das Aufbringen einer gleichmässig über die gesamte Länge jedes Polhornes verteilten, möglichst lagenweisen Wicklung.

Eine heute übliche Wickelvorrichtung weist eine als Hohlwelle ausgebildete Wickelstange auf, an deren Ende eine oder mehrere rechtwinklig angeordnete Drahtführerdüsen angebracht sind. Die Wickelstange ist derart gesteuert, dass die Drahtführerdüsen mit dem austretenden Wickeldraht eine Hubbewegung und der Stator eine Schwenkbewegung um etwa eine Polteilung ausführt. Dadurch wird der Draht in einer annähernd rechteckigen Wickelbahn um das entsprechende Polhorn geführt.

Damit sich die Wicklung nicht gehäuft an einer Stelle aufbaut, ist eine zusätzliche Bewegung der Drahtführerdüsen in radialer Richtung hin und zurück erforderlich.

Eine Vorrichtung der eingangs genannten Art ist in der EP-A1 076 401 offenbart. Die dort beschriebene Wickelvorrichtung ist jedoch eine aufwendige Konstruktion.

Der Erfindung liegt die Aufgabe zugrunde eine Vorrichtung der eingangs genannten Art zu schaffen, die möglichst einfach aufgebaut ist, auf einfache Weise umgerüstet werden kann und sich zum gleichzeitigen Umwickeln mehrerer Polhörner eines Stators geeignet sind.

Zur erfindungsgemässen Lösung der Aufgabe führt, dass
- der Drahtführer zur Ausführung einer ersten Verschiebebewegung in einer ersten Richtung mit einer axial in der ersten Richtung verschiebbaren Wikkelstange wirkverbunden ist,
- ein Schaltapparat zur Ausführung einer zweiten Verschiebe- bzw. Drehbewegung in einer zweiten Richtung mit dem zu wickelnden Stator wirkverbunden ist, und
- der Drahtführer zur Ausführung der Verschiebebewegung in einer der Längsrichtung des zu umwickelnden Polhornes entsprechenden dritten Richtung mit einer in der dritten Richtung verschiebbaren Halterung verbunden ist.

Bevorzugt ist die Halterung über eine zweite Führung in der dritten Richtung verschiebbar, wobei zur Ausführung der Verschiebebewegung vorzugsweise eine erste Gewindespindel angeordnet ist. Diese erste Gewindespindel ist bevorzugt über eine biegsame Welle mit einem ersten Antriebsmotor verbunden.

Zweckmässigerweise ist die Halterung an einem entlang der zweiten Führung verschiebbaren Verstellblock festgelegt, wobei die Halterung bevorzugt entlang einer am Verstellblock angeordneten ersten Führung in der ersten Richtung verschiebbar ist und die erste Gewindespindel am Verstellblock angreift.

Bei einer bevorzugten Ausführungsform der erfindungsgemässen Vorrichtung ist an der Wickelstange ein Halterungsteil mit einem in der dritten Richtung liegenden Langloch angeordnet und ein an der Halterung festgelegter Führungsbolzen ist im Langloch geführt.

Die Wickelstange ist bevorzugt über eine zweite Gewindespindel mit einem zweiten Antriebsmotor verbunden.

Der Schaltapparat ist während des Wickelvorganges bevorzugt mit einer Spannvorrichtung für den zu wickelnden Stator verbunden.

Zum gleichzeitigen Umwickeln mehrerer Polhörner eines Stators sind mehrere Halterungen mit je einem Drahtführer angeordnet, die Wickelstange greift an jedem der Halterungen an und die Halterungen sind über einen ersten gemeinsamen Antriebsmotor synchron verschiebbar.

Die erfindungsgemässe Vorrichtung eignet sich insbesondere zum Bewickeln eines Stators für einen Innenläufer-Elektronikmotor.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine Schrägsicht auf eine Wickelmaschine;
- Fig. 2 eine Schrägsicht auf ein Detail von Fig. 1;
- Fig. 3 eine Seitenansicht einer Verstelleinheit für eine Drahtführerdüse von Fig. 1 in vergrösserter Darstellung;
- Fig. 4 eine Schrägsicht auf die Wickelmaschine von Fig. 1 mit einer Paletten-Transporteinheit;
- Fig. 5 eine Seitenansicht eines Details von Fig. 4;
- Fig. 6 eine Ansicht von unten auf ein Detail von Fig. 1;
- Fig. 7, 8 Darstellung der Relativbewegungen einer Drahtführerdüse während eines Wickelvorganges.

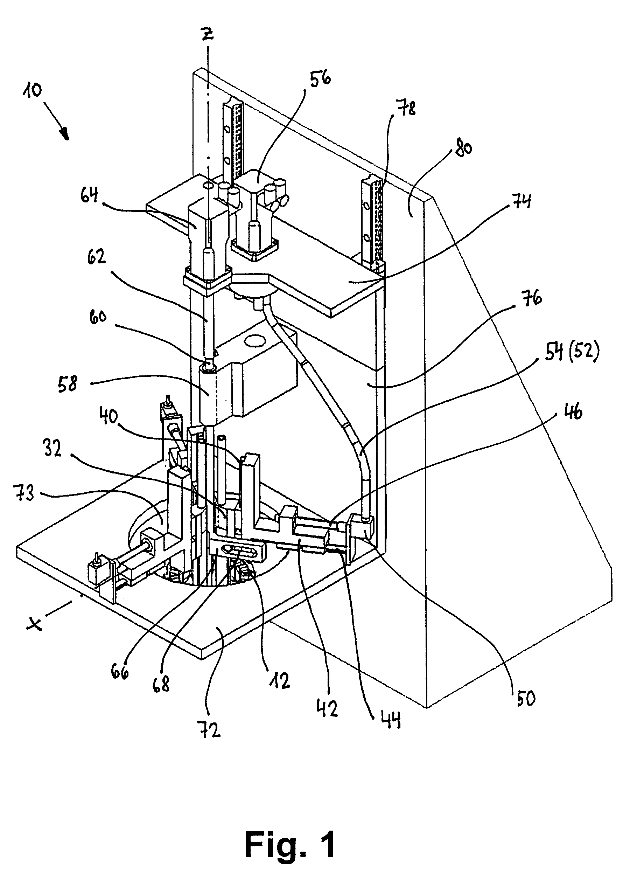

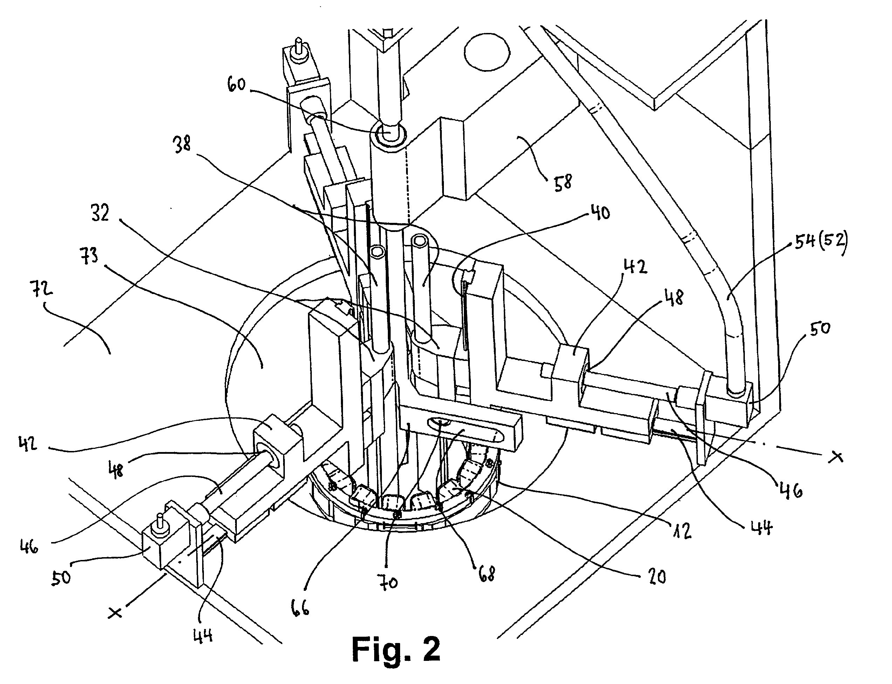

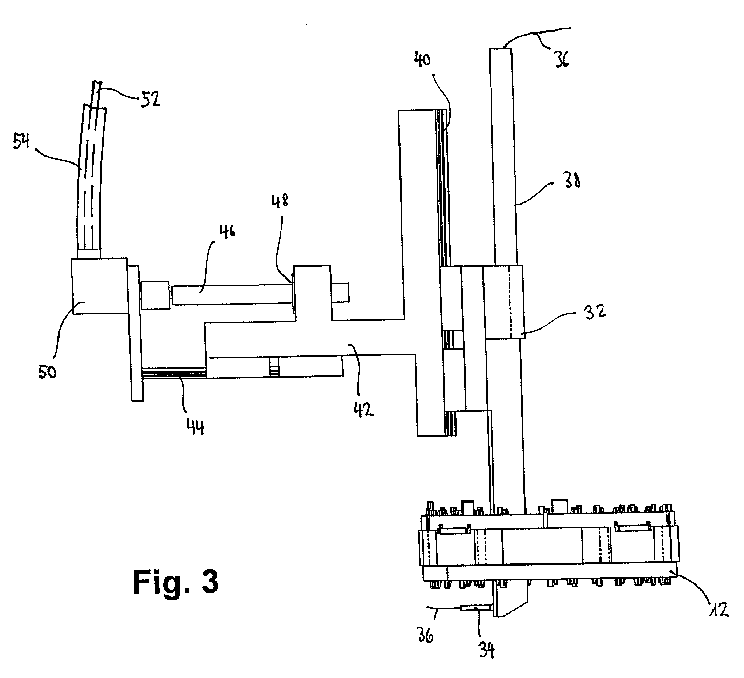

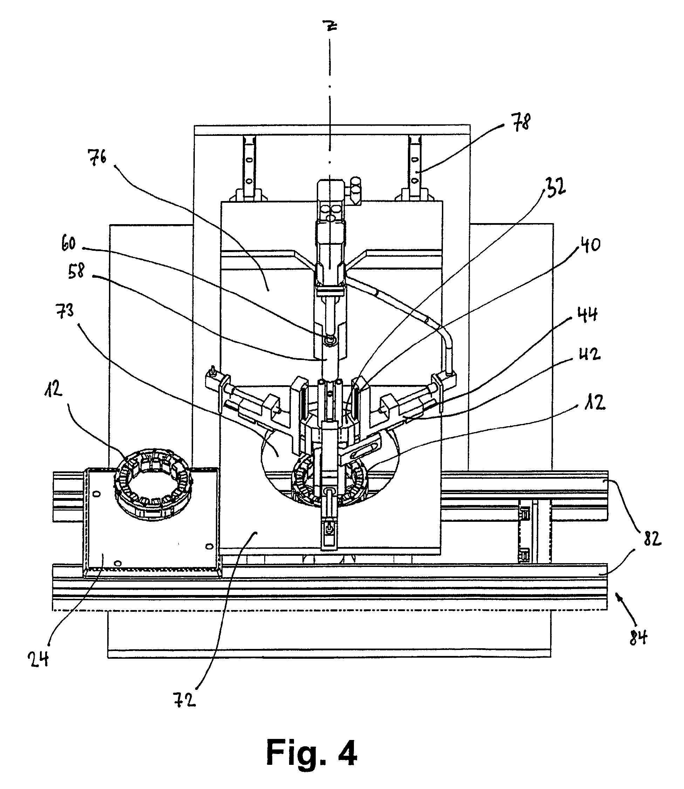

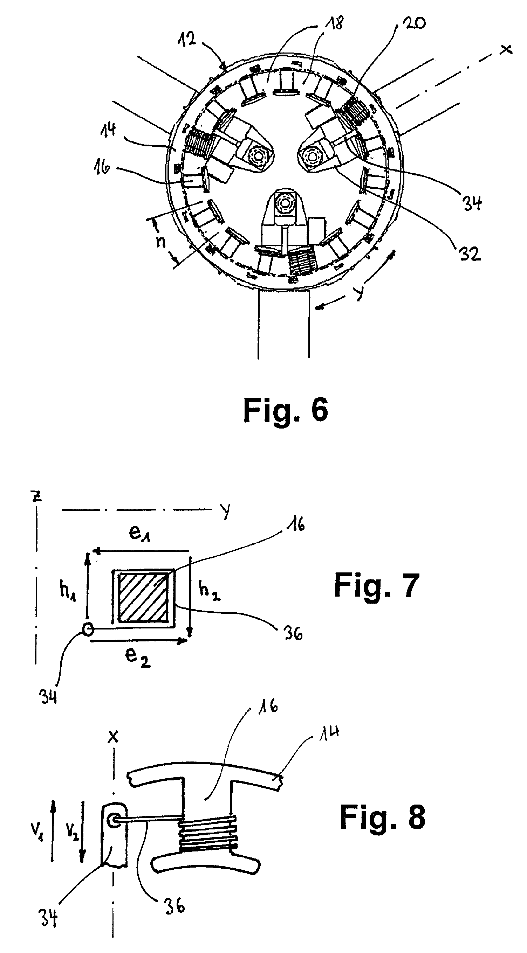

Eine in den Fig. 1 bis 8 dargestellte Wickelmaschine 10 ist zum Wickeln von mehrpoligen Statoren 12 vorgesehen. Der beispielsweise aus Fig. 6 ersichtliche Stator 12 besteht im wesentlichen aus einem ringförmigen Körper 14 mit von diesem radial nach innen abragenden Polhörnern 16, die durch Zwischenräume in Form von Axialnuten 18 voneinander getrennt angeordnet sind. Drei Wicklungen 20 sind bereits erfolgt. Der beispielhaft dargestellte 15-polige Stator 12 ist Teil eines Innenläufer-Elektronikmotors. Der Stator 12 wird durch Stanzpaketieren von identischen Blechlamellen zu einem Blechpaket hergestellt.

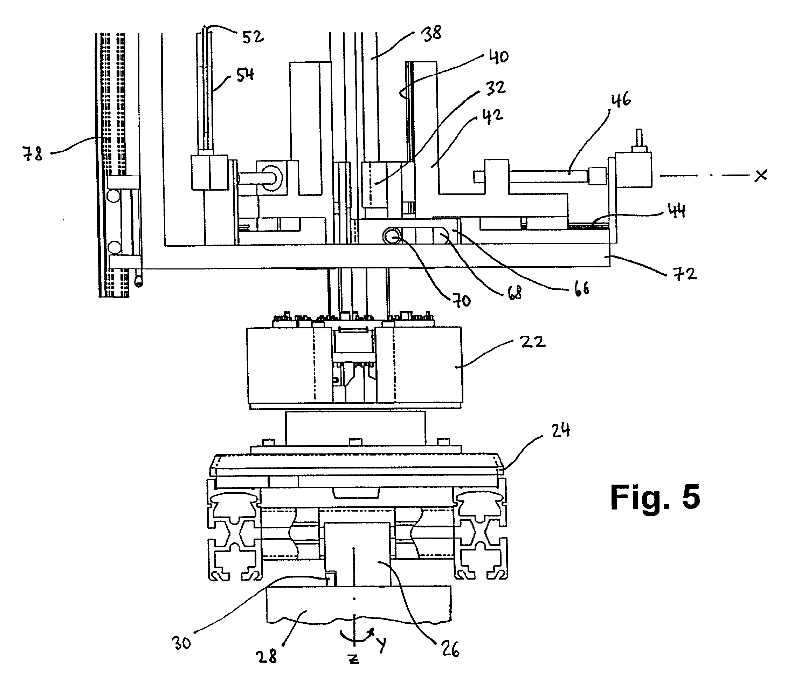

Wie aus Fig. 5 ersichtlich, ist der Stator 12 während des Wickelvorganges in einer Spannvorrichtung 22 fixiert. Eine in einer Transportpalette 24 drehbar gelagerte Welle 26 ist mit der Spannzange 22 starr verbunden. Das freie Ende der Welle 26 ist in der Wickelposition über einen Mitnehmer 30 mit einem Schaltapparat 28 verbunden. Der Schaltapparat 28 dient der Ausführung einer Drehbewegung des Stators 12 um seine Rotationsachse z. Die Transportpalette 24 wird über einen Palettenförderer 84 mittels Transportbändern 82 zur Wickelmaschine 10 hin und von dieser wieder weg geführt.

Eine Halterung 32 für eine Drahtführerdüse 34 ist in einer senkrecht angeordneten, parallel zur Rotationsachse z des Stators 12 liegenden ersten Führungsschiene 40 gleitend gelagert. Die Drahtführerdüse 34 ist am unteren Ende der Halterung 32 festgelegt und weist bezüglich des Stators 12 und seiner Rotationsachse z radial nach aussen. Der obere Teil der Halterung 32 ist als Drahtleitrohr 38 ausgebildet. Der Wickeldraht 36 wird über das Drahtleitrohr 38 der Drahtführerdüse 34 zugeführt.

Die erste Führungsschiene 40 ist Teil eines Verstellblockes 42, welcher auf einer zweiten ortsfesten Führungsschiene 44 in einer horizontalen Verschiebungsachse x in Richtung auf die der Rotationsachse des Stators entsprechende vertikale Achse z verschiebbar ist. Der Verstellblock 42 ist über eine in einem Gewinde 48 im Verstellblock 42 gelagerte erste Gewindespindel 46 auf der ersten Führungsschiene 40 verschiebbar. Die erste Gewindespindel 46 ist über ein Umlenkgetriebe 50 mit in einer Hülle 54 gelagerten biegsamen Welle 52 verbunden.

Im dargestellten Ausführungsbeispiel sind drei der vorstehend beschriebenen Einheiten zur gleichzeitigen Bewicklung von drei Polhörnern 16 eines Stators 12 in einem Winkel von jeweils 120° symmetrisch zueinander angeordnet. Jede der biegsamen Wellen 52 (in der Zeichnung ist nur einer biegsame Welle dargestellt) ist mit einem zentralen ersten Antriebsmotor 56 verbunden.

In einem Lagerblock 58 ist eine in der vertikalen Achse z verschiebbare Wickelstange 60 gelagert. Zur Ausführung von Hubbewegungen in der Achsenrichtung z ist die Wickelstange 60 an ihrem oberen Ende als zweite Gewindespindel 62 ausgebildet, welche mit einem zweiten Antriebsmotor zur Ausführung der Hubwegungen der Wickelstange 60 verbunden ist.

Am unteren Ende der Wickelstange 60 sind horizontal abragende Halterungsteile 66 mit einem ebenfalls in horizontaler Richtung x verlaufenden Langloch 68 angeordnet. Das Langloch 68 dient der Aufnahme von seitlich an der Halterung 32 angebrachten Führungsbolzen 70. Mit dieser Anordnung der Halterungsteile 66 wird eine Hubbewegung der Wickelstange 60 gleichzeitig auf alle drei Halterungen 32 übertragen, was zu einer Synchronisierung der Hubwegungen aller Drahtführerdüsen 34 führt.

Die zweiten Führungsschienen 44 für die Verstellblöcke 42 sind auf einer ersten Plattform 72 montiert. Diese Plattform 72 weist eine zentrale Öffnung 73 auf. Die ersten Führungsschienen 40 und die in diesen gleitend verschiebbaren Halterungen 32 durchsetzen die Öffnung 73. Die beiden Antriebsmotoren 56, 64 sind auf einer oberhalb der ersten Plattform 72 angeordneten zweiten Plattform 74 montiert. Die beiden Plattformen 72, 74 sind über eine Rückwand 76, an welcher der Lagerblock 58 für die Wickelstange 60 festgelegt ist, zueinander in Abstand gehalten. Die Anordnung bestehend aus den beiden Plattformen 72, 74 und der Rückwand 76 ist über dritte Führungsschienen 78 an einer Montagewand 80 in vertikaler Richtung verschiebbar befestigt.

Wie in Fig. 7 dargestellt, erfolgt die Wicklung des Drahtes 36 durch eine annähernd rechteckförmige Bewegung der Drahtführerdüse 34 um das zu bewikkelnde Polhorn 16. Die Steuerung der Drahtführerdüse 34 erfolgt über die Hubbewegungen der Wickelstange 60 und die Schaltbewegungen des Schaltapparates 28 um jeweils eine Polteilung n. Der Bewegungsablauf der Drahtführerdüse 34 zum Aufbringen einer Wicklungsschlaufe um das Polhorn 16 setzt sich aus den folgenden, nacheinander ausgeführten Einzelbewegungen zusammen:
- Erste Hubbewegung h₁ in vertikaler Richtung nach oben, ausgeführt durch eine entsprechende Hubbewegung der Wickelstange 60
- Erste Schaltbewegung e₁ in horizontaler Richtung, ausgeführt durch eine entsprechende Schaltbewegung des Schaltapparates 28 in seiner Drehrichtung
- Zweite Hubbewegung h₂ vertikale nach unten, ausgeführt durch eine entsprechende Hubbewegung der Wickelstange 60
- Zweite Schaltbewegung e₂ in entgegengesetzter horizontaler Richtung, ausgeführt durch eine entsprechende Schaltbewegung des Schaltapparates 28.

Die genannten Einzelbewegungen der Drahtführerdüse 34 relativ zu den zu umwickelnden Polhörnern 16 werden hintereinander solange ausgeführt, bis die vollständige Wicklung 20 auf dem Polhorn 16 aufgebaut ist.

Fig. 8 zeigt die Verschiebebewegungen der Drahtführerdüse 34 in horizontaler Richtung x. Diese Verschiebebewegungen ergeben sich aus der gleitenden Verschiebung der Verstellblöcke 42 entlang den zweiten Führungsschienen 44. Eine erste Verschiebebewegung v₁ erfolgt bezüglich der Rotationsachse z radial nach aussen, eine zweite Verschiebebewegung v₂ ist der ersten Verschiebebewegung v₁ entgegengesetzt. Die Verschiebebewegungen v_{1, 2} sind den senkrecht dazu ausgeführten Hub- und Schaltbewegungen h_{1, 2} bzw. e_{1, 2} überlagert. Sie erfolgen entsprechend der Wickelgeschwindigkeit zur Erzielung gleichmässiger Wickellagen kontinuierlich oder schrittweise zum Aufbau einer Wickellage radial nach aussen (v₁) und zur nachfolgenden Wicklung der nächsten Lage radial nach innen (v₂).

## Patentansprüche

1. Vorrichtung zum Wickeln von Draht (36) um Polhörner (16) eines mehrpoligen rotationssymmetrischen Stators (12) einer elektrischen Maschine, mit einem Drahtführer (34) zur Ausgabe des Drahtes (36) und zur Ausführung einer aus Einzelbewegungen zusammengesetzten Wickelbewegung um das zu umwickelnde Polhorn (16) und einer Verschiebebewegung in Längsrichtung des Polhornes (16),
**dadurch gekennzeichnet, dass**
- der Drahtführer (34) zur Ausführung einer ersten Verschiebebewegung in einer ersten Richtung (z) mit einer axial in der ersten Richtung (z) verschiebbaren Wickelstange (60) wirkverbunden ist,
- ein Schaltapparat (28) zur Ausführung einer zweiten Verschiebe- bzw. Drehbewegung in einer zweiten Richtung (y) mit dem zu wickelnden Stator (12) wirkverbunden ist, und
- der Drahtführer (34) zur Ausführung der Verschiebebewegung in einer der Längsrichtung des zu umwickelnden Polhornes (16) entsprechenden dritten Richtung (x) mit einer in der dritten Richtung (x) verschiebbaren Halterung (32) verbunden ist.

2. Vorrichtung nach Anspruch 1, **dadurch gekennzeichnet, dass** die Halterung (32) über eine zweite Führung (44) in der dritten Richtung (x) verschiebbar ist.

3. Vorrichtung nach Anspruch 2, **dadurch gekennzeichnet, dass** zur Ausführung der Verschiebebewegung eine erste Gewindespindel (46) angeordnet ist.

4. Vorrichtung nach Anspruch 3, **dadurch gekennzeichnet, dass** die erste Gewindespindel (46) über eine vorzugsweise biegsame Welle (52) mit einem ersten Antriebsmotor (56) verbunden ist.

5. Vorrichtung nach Anspruch 3 oder 4, **dadurch gekennzeichnet, dass** die Halterung (32) an einem entlang der zweiten Führung (44) verschiebbaren Verstellblock (42) festgelegt ist.

6. Vorrichtung nach Anspruch 5, **dadurch gekennzeichnet, dass** die Halterung (32) entlang einer am Verstellblock (42) angeordneten ersten Führung (40) in der ersten Richtung (z) verschiebbar ist und die erste Gewindespindel (46) am Verstellblock (42) angreift.

7. Vorrichtung nach einem der Ansprüche 1 bis 6, **dadurch gekennzeichnet, dass** an der Wickelstange (60) ein Halterungsteil (66) mit einem in der dritten Richtung (x) liegenden Langloch (68) angeordnet und ein an der Halterung (32) festgelegter Führungsbolzen (72) im Langloch (68) geführt ist.

8. Vorrichtung nach einem der Ansprüche 1 bis 7, **dadurch gekennzeichnet, dass** die Wickelstange (60) vorzugsweise über eine zweite Gewindespindel (62) mit einem zweiten Antriebsmotor (64) verbunden ist.

9. Vorrichtung nach einem der Ansprüche 1 bis 8, **dadurch gekennzeichnet, dass** der Schaltapparat (28) während des Wickelvorganges mit einem Spannvorrichtung (22) für den zu wickelnden Stator (12) verbunden ist.

10. Vorrichtung nach einem der Ansprüche 1 bis 9, **dadurch gekennzeichnet, dass** zum gleichzeitigen Umwickeln mehrerer Polhörner (16) eines Stators (12) mehrere Halterungen (42) mit je einem Drahtführer (34) angeordnet sind, die Wickelstange (60) an jeder der Halterungen (42) angreift und die Halterungen (32) über einen ersten gemeinsamen Antriebsmotor (52) synchron verschiebbar sind.
